# EUROPEAN PATENT SPECIFICATION

(11) **EP 2 520 472 B1**
(45) Date of publication and mention of the grant of the patent: **13.01.2016**
(21) Application number: 12165658.1
(22) Date of filing: 26.04.2012
(51) Int. Cl.: B60R 22/46

(54) **Device and method for belt tightener activation**
Vorrichtung und Verfahren zur Aktivierung der Gurtspannvorrichtung
Dispositif et procédé d'activation de serrage de courroie

(30) Priority: 04.05.2011 SE 1150387
(43) Date of publication of application: 07.11.2012
(73) Proprietor: Scania CV AB (publ), 151 87 Södertälje (SE)
(72) Inventor: Claezon, Fredrich, SE-139 53 VÄRMDÖ (SE); Kollegger, Peter, SE-413 26 GÖTEBORG (SE)
(74) Representative: Scania CV AB

(56) References cited:
- EP-A1- 1 632 400
- EP-A2- 1 211 144
- WO-A1-2011/006626
- DE-A1- 10 303 148
- US-B1- 6 452 487
- US-B2- 6 758 495

## Description

### Field of the invention

The present invention relates to a device, a method and a motor vehicle comprising said device and/or method for belt tightener activation in rollover accidents. In particular, the present invention relates to a device according to claim 1 and a method according to claim 4.

### Background to the invention

Rollover accidents in trucks are one of the commonest forms of fatal accident involving heavy vehicles. The primary factor in the outcome of this type of accident is drivers' use of safety belts. However, even when safety belts are used, there is still a significant risk that the driver may partially or completely slip out of the belt and hit objects in the cab or that part of his/her body may be projected through the side window.

At present, devices such as side-curtain airbags and belt tighteners are provided to protect the driver in rollover accidents. A belt tightener pulls the driver towards the seat to prevent him/her slipping out of the belt and sustaining extra injuries.

American patent US 6758495 B2 describes a method and a device for a belt tightener in a vehicle. The vehicle comprises a "forward-looking detection system" to detect whether the vehicle is in a dangerous driving situation and a system to detect the driver's position. If a situation of danger to the vehicle is detected, a specific degree of force is applied to pull the driver back towards the seat and a lesser degree of force is then applied to keep him/her there. Examples of dangerous driving situations include heavy braking, collision, rollover, swerving or skidding sideways.

DE 103 03 148 A1 discloses a device and a method in which belt tightener activation depends on roll rate and vehicle surroundings.

### Object of the invention

The object of the present invention is to propose an improved device and method for belt tightener activation in heavy vehicles at the time of rollover accidents and thereby improve traffic safety.

### Summary of the invention

The aforesaid object is achieved with the invention defined by the independent claims. Preferred embodiments are defined by the dependent claims.

The present invention thus relates to a device, a method and a motor vehicle comprising said device and/or method for belt tightener activation in a vehicle at the time of rollover accidents. The device according to the present invention comprises a device for activating at least one belt tightener in a safety belt system in a vehicle, such that said vehicle comprises at least one sensor element to monitor, and transmit data containing information about, the drivability situation in front of the vehicle, in the direction of travel, to a calculation unit situated in the vehicle, the vehicle comprises at least one tilt sensor to receive and send to the calculation unit data containing information about the vehicle's lateral tilt, and the calculation unit is adapted to send a signal to the safety belt system to activate the belt tightener when the vehicle's angle of lateral tilt exceeds a predetermined value. Such a device and method are described in US 6758495 B2. A distinguishing aspect of the invention according to claims 1 and 4 is that said predetermined value is represented by a first value if said drivability data indicate no increased rollover risk to the vehicle and by a second value if said drivability data indicate an increased rollover risk to the vehicle, the second value being smaller than the first value. The conditions governing how far the vehicle should be allowed to tilt before the belt tightener is activated are thus clearly defined.

It is possible to detect that a car is going to roll over at an earlier stage than in the case of a heavy vehicle. Imminent rollover of a car can sometimes be detected even before any of its wheels have left the ground. Vehicles with bodywork involving a relatively large suspension deflection (lurch capability) relative to the chassis which supports the wheel shafts, e.g. a truck or bus, may therefore have in the bodywork not only significant lateral acceleration but also a large angle of tilt without risk of the vehicle rolling over. To avoid the risk of activating the vehicle's belt tighteners on an ordinary bend, the threshold value for the angle of tilt at which they are activated must therefore be set at a relatively large angle. Having a first angle and a second angle combines with drivability data to eliminate any risk of the belt tightener being activated too late. In such a case the driver might have slipped out of position in the belt long before the criterion for activating the belt tightener was met, with consequent risk of him/her being injured by, for example, the vehicle's fittings or side airbag.

Furthermore, the present invention relates to a device and method where the sensor element is in the form of a forward-looking camera fixed to the vehicle, and the calculation unit is adapted to detect an increased rollover risk to the vehicle through image processing of said data from the camera, wherein said image processing of said data involves colour and reflection comparisons.

Furthermore, the present invention relates to a device and method where the rollover risk to the vehicle is assumed to be greater if deviation from a traffic lane occurs on an uneven road and/or when the region adjoining the road is uneven compared with a flat region. A road and/or region is defined as uneven if, for example, any ground within a distance of 10 metres from the vehicle differs in altitude by more than 1 metre from that of the vehicle. Altitude means vertical distance from sea level.

According to one embodiment of the present invention, the sensor element comprises a GPS unit or equivalent. In this case, parameters such as the width and/or tilt of the road as defined by map data may serve as appropriate data for the calculation unit. This embodiment involves less processor load upon the calculation unit and also allows manual input of information about the vehicle's rollover risk on specific road sections.

According to one embodiment of the present invention, the rollover risk to the vehicle is assumed to be greater if deviation from a traffic lane occurs on a narrow road without verges than on a wide road with verges. The definition of a narrow road might for example be road width less than 1.5 times the vehicle's width.

These two latter embodiments result in a device and method for belt tightener activation which are simple and cheap to apply in existing vehicles equipped with tilt sensors and GPS units.

### Brief description of the drawings

Figure 1 illustrates schematically a vehicle (100) according to the present invention.
Figures 2 and 3 illustrate schematically a vehicle (100) according to the present invention, as viewed from above.
Figures 4 to 6 illustrate schematically a vehicle (100) according to the present invention, as viewed from in front.

### Detailed description of preferred embodiments of the invention

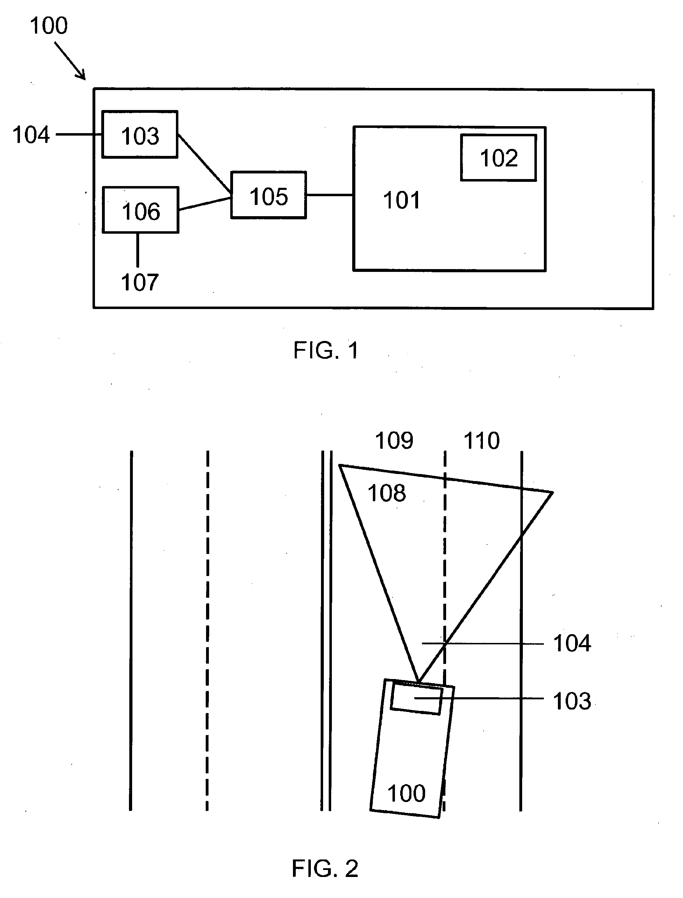

The invention will now be described in more detail with reference to Figures 1-6.

**Figure 1** illustrates schematically a vehicle (100) which comprises at least one safety belt system (101). The safety belt system (101) comprises at least one belt tightener (102) which can be activated by the safety belt system (101). The object of the belt tightener (102) is to tighten the belt round the driver and thereby minimise harm to him/her in a risk situation. The vehicle (100) also comprises at least one sensor element (103). The sensor element (103) may be one or more preferably forward-looking cameras fixed to the vehicle (100), preferably in the front section of the vehicle. The sensor element (103) may also take the form of a GPS unit or equivalent. The GPS unit does not, of course, have to be situated in the front section of the vehicle. The sensor element (103) is adapted to capture information (104) about the drivability of a region in front of the vehicle and send the information (104) to a calculation unit (105) situated in the vehicle, preferably via signal transmission cables. The calculation unit (105) is in signal communication with the vehicle's safety belt system (101). The calculation unit (105) may be separate from, or part of, the safety belt system (101). The vehicle (100) is further equipped with at least one tilt sensor (106) adapted to detect the vehicle's current angle of lateral tilt (107). The tilt sensor (106) is adapted to send information about the vehicle's detected angle (107) to the calculation unit (105).

**Figure 2** illustrates a situation with the vehicle (100) as viewed from above when travelling along a road. In this case, the sensor element (103) is in the form of a forward-looking camera (103) fixed to the front section of the vehicle (100). The camera (103) gathers data (104) from a region in front (108), here illustrated as a triangular area in front of the vehicle (100), and sends these data (104), preferably by cable or the like, to the vehicle's calculation unit (105). In the situation illustrated in Figure 2, the vehicle (100) is about to deviate from a traffic lane (109). Outside the traffic lane (109) there is a region (110) which in this case is probably drivable in that it comprises a verge. Image processing by the calculation unit (105) of data (104) gathered from the region (108) in front of the vehicle (100) by the camera (103) and transmitted to the calculation unit (105) usually makes it possible to decide whether the region (110) is of substantially the same nature as the region (109) and is therefore also drivable. For example, the calculation unit (105) may determine that the region (109) and the region (110) are substantially of the same colour and may therefore draw the conclusion that the two regions have the same drivability. The image processing of data (104) can be carried out either by a calculation unit (105) integrated in the camera (103) or by a separate calculation unit (105) and may use parameters such as the colour of, and/or reflections from, the region (108) to estimate its nature and drivability. When the region (110) is deemed to be drivable, the calculation unit (105) can send a signal to the safety belt system (101) containing a command for the safety belt system (101) to activate the belt tightener (102) when the vehicle's lateral tilt angle (107) exceeds a first value (a).

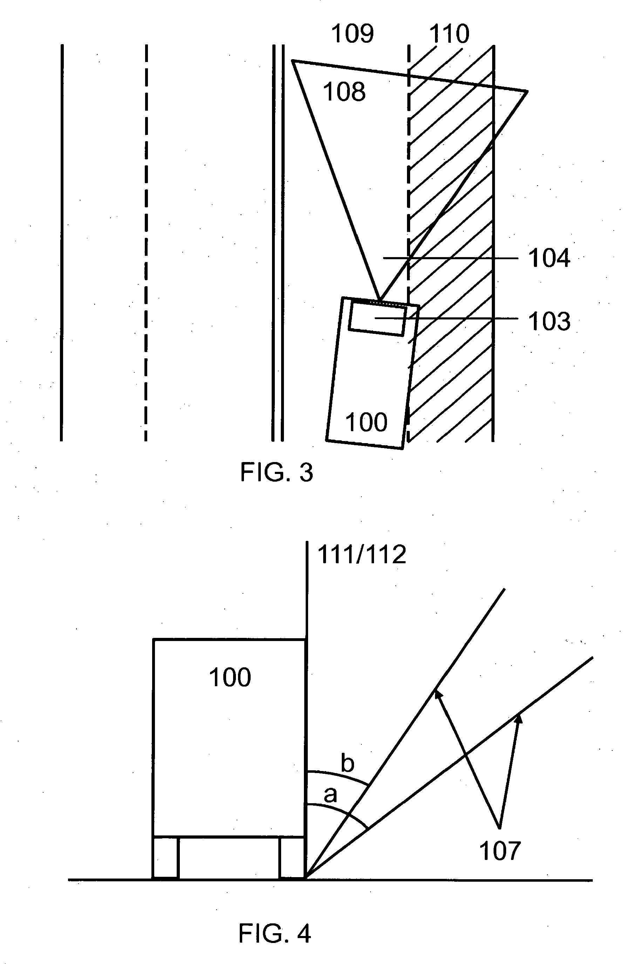

**Figure 3** illustrates a situation with the vehicle (100) as viewed from above when travelling along a road, similar to the situation illustrated in Figure 2 but in this case the region (110) is deemed to be undrivable. For example, the calculation unit (105) may determine that the region (109) and the region (110) are different in colour and therefore draw the conclusion that the region (110) is less drivable than the region (109). There is therefore an increased rollover risk to the vehicle (100) from travelling on the region (110). The vehicle's calculation unit (105) may therefore send a signal to the safety belt system (101) containing a command for the safety belt system (101) to activate the belt tightener (102) when the vehicle's lateral angle of tilt (107) exceeds a second value (b) which is smaller than the first value (a). Rolling in the situation illustrated in Figure 3 will therefore cause the belt tightener (102) to be activated and to secure the driver to the seat at an earlier stage of the roll, as the probability that the vehicle (100) will roll over is deemed greater than in the situation illustrated in Figure 2. The criterion for deploying any of the vehicle's airbags need not be altered, as an airbag usually reacts quickly enough to deploy before the vehicle hits the ground.

**Figure 4** illustrates a vehicle (100) according to the present invention as viewed from above. The vehicle's angle of tilt (107) is defined preferably as the angle between a first line (111) and a second line (112), where the first line (111) is parallel with a perpendicular from a surface parallel with sea level, and the second line (112) is at right angles to a line parallel with a line between the vehicle's pair of front wheels and also extends in a vertical plane through the vehicle's front wheel shaft. In the situation illustrated in Figure 4, the vehicle's angle of tilt (107) is substantially 0 degrees and the first line (111) and second line (112) therefore coincide. The first angle (a) is intended to illustrate the vehicle's angle of tilt (107) for activation of its belt tightener (102) when the risk of the vehicle (100) rolling over is deemed low, as in the situation illustrated in Figure 2. The second angle (b) is intended to illustrate the vehicle's angle of tilt (107) for activation of its belt tightener (102) when the risk of the vehicle (100) rolling over is deemed high, as in the situation illustrated in Figure 3. The second angle (b) is smaller than the first angle (a).

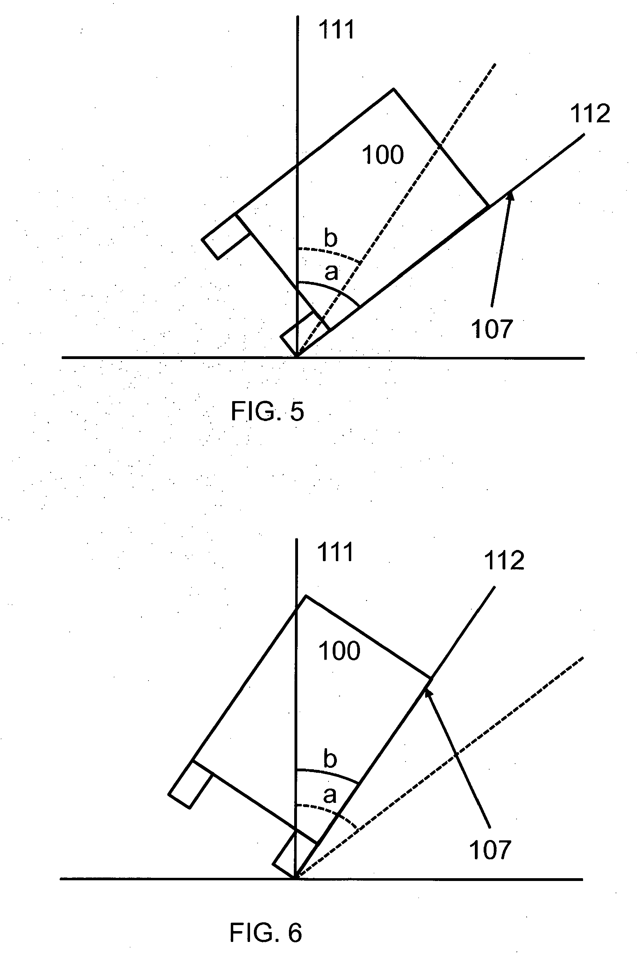

**Figure 5** illustrates a vehicle (100) according to the present invention with its angle of tilt (107) corresponding to a first angle (a) which is greater than a second angle (b). In Figure 5, the first line (111) and the second line (112) are more clearly visible. When the vehicle (100) is travelling in a region where the risk of its rolling over is deemed to be low, the belt tightener (102) is only activated when the angle of tilt (107) corresponds to this first angle (a).

**Figure 6** illustrates a vehicle (100) according to the present invention with its angle of tilt (107) corresponding to a second angle (b) which is smaller than a first angle (a). When the vehicle (100) is travelling in a region where the risk of its rolling over is deemed to be high, the belt tightener (102) is activated as soon as the angle of tilt (107) corresponds to this second angle (b).

The description relates to a device and method for belt tighteners for a driver of the vehicle. The method and the device are of course also applicable to any passengers, particularly if the vehicle is a bus.

The above description is primarily intended to facilitate comprehension of the invention and is of course not limited to the embodiments indicated, since other variants of the invention are also possible and conceivable within the scope of the concept of the invention and the protective scope of the claims set out below.

## Claims

1. A device for activating at least one belt tightener (102) in a safety belt system (101) in a vehicle (100), such that said vehicle (100) comprises at least one sensor element (103) to monitor, and transmit data (104) containing information about, the drivability of a region (108) in front of the vehicle (100), as viewed in its direction of travel, to a calculation unit (105) situated in the vehicle, the vehicle (100) comprises at least one tilt sensor (106) to receive and send data containing information about the vehicle's lateral tilt (107) to the calculation unit (105), and the calculation unit (105) is adapted to send a signal to the safety belt system (101) to activate the belt tightener (102) when the vehicle's angle of lateral tilt (107) exceeds a predetermined value, wherein
- said predetermined value is represented by a first value (a) if said data (104) indicate no increased rollover risk to the vehicle (100),
- said predetermined value is represented by a second value (b) if said data (104) indicate an increased rollover risk to the vehicle (100),
- the second value (b) is smaller than the first value (a),
- the sensor element (103) is in the form of a forward-looking camera fixed to the vehicle (100), and the calculation unit (105) is adapted to detect an increased rollover risk to the vehicle (100) through image processing of said data (104) from the camera, wherein said image processing of said data (104) involves colour and reflection comparisons, and wherein the calculation unit (105) is adapted to detect an increased rollover risk to the vehicle (100) when travelling on an uneven road and/or when the region adjoining the road is uneven, where uneven is defined as any ground with a distance of 10 meters from the vehicle differing in altitude by more than 1 metre from that of the vehicle, where altitude means vertical distance from sea level.

2. A device according to claim 1, **characterised in that** the sensor element (103) is in the form of at least one GPS unit and the calculation unit (105) is adapted to detect an increased rollover risk to the vehicle (100) through the processing of map data received by said at least one GPS unit.

3. A device according to claim 2, **characterised in that** the calculation unit (105) is adapted to detect an increased rollover risk to the vehicle (100) when travelling on a narrow road and/or a road without verges.

4. A method for activating at least one belt tightener (102) in a safety belt system (101) in a vehicle (100) which comprises at least one sensor element (103) to receive and send data (104) containing information about drivability of a region (108) in front of the vehicle (100), as viewed in its direction of travel, to a calculation unit (105) situated in the vehicle (100), which vehicle (100) comprises at least one tilt sensor (106) to receive and send data containing information about the vehicle's lateral tilt (107) to the calculation unit (105), which method comprises the steps of:
- the calculation unit (105) transmitting a signal to the safety belt system (101) to activate the belt tightener (102) when the vehicle's lateral angle of tilt (107) exceeds a predetermined value, wherein
- said predetermined value is represented by a first value (a) if said data (104) indicate no increased rollover risk to the vehicle (100),
- said predetermined value is represented by a second value (b) if said data (104) indicate an increased rollover risk to the vehicle (100),
- the second value (b) is smaller than the first value (a), wherein the sensor element (103) is in the form of at least one forward-looking camera fixed to the vehicle (100),
- the calculation unit (105) detecting an increased rollover risk to the vehicle (100) through image processing of said data (104) from the camera, wherein said image processing of said data (104) involves colour and reflection comparisons, and
- the calculation unit (105) detecting an increased rollover risk to the vehicle (100) when travelling on an uneven road and/or when the region adjoining the road is uneven, where uneven is defined as any ground with a distance of 10 meters from the vehicle differs in altitude by more than 1 metre from that of the vehicle where altitude means vertical distance from sea level..

5. A method according to claim 4, where the sensor element (103) is in the form of at least one GPS unit,
**characterised by** the further step of:
- the calculation unit (105) detecting an increased rollover risk to the vehicle (100) through processing of map data received by said at least one GPS unit.

6. A method according to claim 5,
**characterised by** the further step of:
- the calculation unit (105) detecting an increased rollover risk to the vehicle (100) when travelling on a narrow road and/or a road without verges.

7. A motor vehicle, preferably a heavy vehicle, **characterised in that** it comprises a device or a method according to any of the foregoing claims.

## Patentansprüche

1. Vorrichtung zum Aktivieren mindestens eines Gurtspanners (102) in einem Sicherheitsgurtsystem (101) in einem Fahrzeug (100), welches mindestens ein Sensorelement (103) umfasst zum Überwachen und Übertragen von Daten (104), die Informationen über die Befahrbarkeit eines Geländes (108) in Fahrtrichtung vor dem Fahrzeug (100) umfassen, an eine in dem Fahrzeug enthaltene Recheneinheit (105), wobei das Fahrzeug (100) mindestens einen Neigungssensor (106) zum Empfangen und Senden von Daten, die Informationen über die seitliche Fahrzeugneigung (107) umfassen, an die Recheneinheit (105) umfasst, und die Recheneinheit (105) ausgebildet ist, ein Signal an das Sicherheitsgurtsystem (101) zu senden, um den Gurtspanner (102) zu aktivieren, wenn die seitliche Fahrzeugneigung (107) einen vorbestimmten Wert übersteigt, wobei
- der vorbestimmte Wert durch einen ersten Wert (a) dargestellt wird, wenn die Daten (104) keine erhöhte Kippgefahr des Fahrzeugs (100) anzeigen,
- der vorbestimmte Wert durch einen zweiten Wert (b) dargestellt wird, wenn die Daten (104) eine erhöhte Kippgefahr des Fahrzeugs (100) anzeigen,
- der zweite Wert (b) kleiner ist als der erste Wert (a),
- das Sensorelement (103) in Form einer an dem Fahrzeug (100) angebrachten vorausschauenden Kamera vorhanden ist, und die Recheneinheit (105) ausgebildet ist, eine erhöhte Kippgefahr des Fahrzeugs (100) durch Bildverarbeitung der Daten (104) von der Kamera zu detektieren, wobei die Bildverarbeitung der Daten (104) Farb- und Reflektionsvergleiche umfasst und die Recheneinheit (105) ausgebildet ist, eine erhöhte Kippgefahr des Fahrzeugs (100) beim Fahren auf einer unebenen Straße und/oder, wenn das Gelände neben der Straße uneben ist, zu detektieren, wobei uneben definiert ist als irgendein Untergrund im Abstand von 10 Metern von dem Fahrzeug, der sich in der Höhe durch mehr als 1 Meter von dem des Fahrzeugs unterscheidet, wobei die Höhe den vertikalen Abstand zum Meeresspiegel beschreibt.

2. Vorrichtung nach Anspruch 1, **gekennzeichnet dadurch, dass** das Sensorelement (103) in Form mindestens einer GPS-Einheit vorhanden ist und die Recheneinheit (105) ausgebildet ist, eine erhöhte Kippgefahr des Fahrzeugs (100) durch Verarbeiten von Kartendaten zu detektieren, die von der mindestens einen GPS-Einheit empfangen wurden.

3. Vorrichtung nach Anspruch 2, **gekennzeichnet dadurch, dass** die Recheneinheit (105) ausgebildet ist, eine erhöhte Kippgefahr des Fahrzeugs (100) beim Fahren auf einer engen Straße und/oder einer Straße ohne Seitenstreifen zu detektieren.

4. Verfahren zum Aktivieren mindestens eines Gurtspanners (102) in einem Sicherheitsgurtsystem (101) in einem Fahrzeug (100), welches mindestens ein Sensorelement (103) zum Empfangen und Senden von Daten (104), die Informationen über die Befahrbarkeit eines Geländes (108) in Fahrtrichtung vor dem Fahrzeug (100) umfassen, an eine in dem Fahrzeug (100) enthaltene Recheneinheit (105) umfasst, wobei das Fahrzeug (100) mindestens einen Neigungssensor (106) zum Empfangen und Senden von Daten, die Informationen über die seitliche Fahrzeugneigung (107) umfassen, an die Recheneinheit (105) umfasst, wobei das Verfahren die Schritte umfasst:
- Senden eines Signals durch die Recheneinheit (105) an das Sicherheitsgurtsystem (101), um den Gurtspanner (102) zu aktivieren, wenn die seitliche Fahrzeugneigung (107) einen vorbestimmten Wert übersteigt, wobei
- der vorbestimmte Wert durch einen ersten Wert (a) dargestellt wird, wenn die Daten (104) keine erhöhte Kippgefahr des Fahrzeugs (100) anzeigen,
- der vorbestimmte Wert durch einen zweiten Wert (b) dargestellt wird, wenn die Daten (104) eine erhöhte Kippgefahr des Fahrzeugs (100) anzeigen,
- der zweite Wert (b) kleiner ist als der erste Wert (a), wobei das Sensorelement (103) in Form mindestens einer an dem Fahrzeug (100) angebrachten vorausschauenden Kamera vorgesehen ist,
- Detektieren durch die Recheneinheit (105) einer erhöhten Kippgefahr des Fahrzeugs (100) durch Bildverarbeitung der Daten (104) von der Kamera, wobei die Bildverarbeitung der Daten (104) Farb- und Reflektionsvergleiche umfasst, und
- Detektieren durch die Recheneinheit (105) einer erhöhten Kippgefahr des Fahrzeugs (100) beim Fahren auf einer unebenen Straße und/oder wenn das Gelände neben der Straße uneben ist, wobei uneben definiert ist als irgendein Untergrund im Abstand von 10 Metern von dem Fahrzeug, der sich in der Höhe durch mehr als 1 Meter von dem des Fahrzeugs unterscheidet, wobei die Höhe den vertikalen Abstand zum Meeresspiegel beschreibt.

5. Verfahren nach Anspruch 4, wobei das Sensorelement (103) in Form von mindestens einer GPS-Einheit vorhanden ist,
**gekennzeichnet durch** den weiteren Schritt:
- Detektieren, **durch** die Recheneinheit (105), einer erhöhten Kippgefahr des Fahrzeugs (100) **durch** Verarbeiten von Kartendaten, die **durch** die mindestens eine GPS-Einheit empfangen wurden.

6. Verfahren nach Anspruch 5,
**gekennzeichnet durch** den weiteren Schritt:
- Detektieren, **durch** die Recheneinheit (105), einer erhöhten Kippgefahr des Fahrzeugs (100) beim Fahren auf einer engen Straße und/oder einer Straße ohne Seitenstreifen.

7. Kraftfahrzeug, vorzugsweise ein schweres Fahrzeug, **gekennzeichnet dadurch, dass** es eine Vorrichtung oder ein Verfahren nach einem der vorangehenden Ansprüche umfasst.

## Revendications

1. Dispositif pour activer au moins un tendeur de ceinture (102) dans un système de ceinture de sécurité (101) dans un véhicule (100), tel que ledit véhicule (100) comprend au moins un élément de capteur (103) pour surveiller et transmettre des données (104) contenant une information concernant le caractère praticable pour un véhicule d'une région (108) à l'avant du véhicule (100) par rapport à sa direction de déplacement, à une unité de calcul (105) située dans le véhicule, le véhicule (100) comprenant au moins un capteur d'inclinaison (106) pour recevoir et envoyer des données contenant une information concernant l'inclinaison latérale (107) du véhicule à l'unité de calcul (105), et l'unité de calcul (105) étant adaptée de façon à envoyer un signal au système de ceinture de sécurité (101) pour activer le tendeur de ceinture (102) lorsque l'angle d'inclinaison latérale (107) du véhicule dépasse une valeur prédéterminée, dans lequel
- ladite valeur prédéterminée est représentée par une première valeur (a) si lesdites données (104) n'indiquent pas de risque de renversement accru pour le véhicule (100),
- ladite valeur prédéterminée est représentée par une deuxième valeur (b) si lesdites données (104) indiquent un risque de renversement accru pour le véhicule (100),
- la deuxième valeur (b) est inférieure à la première valeur (a),
- l'élément de capteur (103) se présente sous la forme d'une caméra regardant vers l'avant fixée au véhicule (100), et l'unité de calcul (105) est adaptée de façon à détecter un risque de renversement accru pour le véhicule (100) par l'intermédiaire d'un traitement d'image desdites données (104) venant de la caméra, ledit traitement d'image desdites données (104) mettant en oeuvre des comparaisons de couleur et de réflexion, et l'unité de calcul (105) étant adaptée de façon à détecter un risque de renversement accru pour le véhicule (100) lors du déplacement sur une route irrégulière et/ou lorsque la région voisine de la route est irrégulière, irrégulière étant définie comme tout terrain à une distance de 10 mètres à partir du véhicule dont l'altitude diffère de plus de 1 mètre de celle du véhicule, altitude signifiant distance verticale par rapport au niveau de la mer.

2. Dispositif selon la revendication 1, **caractérisé en ce que** l'élément de capteur (103) se présente sous la forme d'au moins une unité de système de localisation sur le globe (GPS), et **en ce que** l'unité de calcul (105) est adaptée de façon à détecter un risque de renversement accru pour le véhicule (100) par l'intermédiaire du traitement de données cartographiques reçues par ladite au moins une unité de système de localisation sur le globe au nombre d'au moins une.

3. Dispositif selon la revendication 2, **caractérisé en ce que** l'unité de calcul (105) est adaptée de façon à détecter un risque de renversement accru pour le véhicule (100) lors du déplacement sur une route étroite et/ou une route sans accotements.

4. Procédé pour activer au moins un tendeur de ceinture (102) dans un système de ceinture de sécurité (101) dans un véhicule (100) qui comprend au moins un élément de capteur (103) pour recevoir et envoyer des données (104) contenant une information concernant le caractère praticable pour un véhicule d'une région (108) à l'avant du véhicule (100) par rapport à sa direction de déplacement, à une unité de calcul (105) située dans le véhicule, le véhicule (100) comprenant au moins un capteur d'inclinaison (106) pour recevoir et envoyer des données contenant une information concernant l'inclinaison latérale (107) du véhicule à l'unité de calcul (105), ce procédé comprenant les étapes suivantes :
- transmission par l'unité de calcul (105) d'un signal au système de ceinture de sécurité (101) pour activer le tendeur de ceinture (102) lorsque l'angle d'inclinaison latérale (107) du véhicule dépasse une valeur prédéterminée, dans lequel :
- ladite valeur prédéterminée est représentée par une première valeur (a) si lesdites données (104) n'indiquent pas de risque de renversement accru pour le véhicule (100),
- ladite valeur prédéterminée est représentée par une deuxième valeur (b) si lesdites données (104) indiquent un risque de renversement accru pour le véhicule (100),
- la deuxième valeur (b) est inférieure à la première valeur (a), dans lequel :
- l'élément de capteur (103) se présente sous la forme d'au moins une caméra regardant vers l'avant fixée au véhicule (100),
- détection par l'unité de calcul (105) d'un risque de renversement accru pour le véhicule (100) par l'intermédiaire d'un traitement d'image desdites données (104) venant de la caméra, ledit traitement d'image desdites données (104) mettant en oeuvre des comparaisons de couleur et de réflexion, et
- détection par l'unité de calcul (105) d'un risque de renversement accru pour le véhicule (100) lors du déplacement sur une route irrégulière et/ou lorsque la région voisine de la route est irrégulière, irrégulière étant définie lorsque tout terrain à une distance de 10 mètres à partir du véhicule dont l'altitude diffère de plus de 1 mètre de celle du véhicule, altitude signifiant distance verticale par rapport au niveau de la mer.

5. Procédé selon la revendication 4, dans lequel l'élément de capteur (103) se présente sous la forme d'au moins une unité de système de localisation sur le globe (GPS),
**caractérisé par** l'étape supplémentaire suivante de :
- détection par l'unité de calcul (105) d'un risque de renversement accru pour le véhicule (100) par l'intermédiaire du traitement de données cartographiques reçues par ladite au moins une unité de système de localisation sur le globe au nombre d'au moins une.

6. Procédé selon la revendication 5,
**caractérisé par** l'étape supplémentaire suivante de :
- détection par l'unité de calcul (105) d'un risque de renversement accru pour le véhicule (100) lors du déplacement sur une route étroite et/ou une route sans accotements.

7. Véhicule à moteur, de préférence véhicule lourd, **caractérisé en ce qu'**il comprend un dispositif ou un procédé selon l'une quelconque des revendications précédentes.
